# EUROPEAN PATENT SPECIFICATION

(11) **EP 2 646 390 B1**
(45) Date of publication and mention of the grant of the patent: **07.01.2015**
(21) Application number: 11794342.3
(22) Date of filing: 30.11.2011
(51) Int. Cl.: C04B 28/04, E04B 2/86

(54) **REINFORCED WALL SYSTEM AND METHOD**
SYSTEM UND VERFAHREN FÜR VERSTÄRKTE WAND
SYSTÈME ET PROCÉDÉ DE CONSTRUCTION D'UN MUR RENFORCÉ

(30) Priority: 02.12.2010 US 419171 P
(43) Date of publication of application: 09.10.2013
(73) Proprietor: Cemex Research Group AG, 2555 Brügg bei Biel (CH)
(72) Inventor: GOERGER, Bryan, TX 77024 (US); ORTIZ, Marcelo, TX 77024 (US); UZCATEGUI, Francisco, TX 77024 (US); THIEL, Patrick, TX 77024 (US)
(74) Representative: Carvajal y Urquijo, Isabel
(86) International application number: PCT/US2011/062519
(87) International publication number: WO 2012/075071

(56) References cited:
- WO-A1-2010/047919
- DE-A1- 3 628 876
- FR-A1- 2 949 131
- US-A- 5 503 670
- US-A1- 2007 062 143
- US-A1- 2007 289 502

## Description

### BACKGROUND OF THE INVENTION

Field of the Invention. The inventions disclosed and taught herein relate generally to reinforced concrete walls; and more specifically relate to reinforced concrete walls using insulating forms.

### Description of the Related Art.

U.S. Patent Application Publication No. 20090229205 discloses an "insulated concrete form system having a pair of bottom U-shaped channels secured to a concrete slab that serve as a footprint for a concrete wall. Exterior and interior foam sheets are aligned within the bottom U-shaped channels that define the wall. Top U-shaped channels are slipped over a top edge of the foam sheets. A plurality of strongbacks are used to provide structural support for the foam sheets during a concrete pour of the wall. The strongbacks each have a pair of hangers adapted to be secured over the top U-shaped channels to secure the strongbacks to the foam sheets. A top wall spacer is used to join a strongback on one side of the wall cavity to a strongback on a second side of the cavity to resist pressure exerted outward on the foam sheets during a concrete pour to form the wall."

U.S. Patent Application Publication No. 20090000241 discloses a "method for forming integrally insulated concrete sandwich walls or wall components is disclosed. The walls are fabricated by casting the walls vertically and pumping the concrete from the bottom of the form or from sides near the base. Walls fabricated thus can be used in commercial, industrial, residential, and agricultural buildings. These walls can be cast on-site or in a manufacturing plant."

U.S. Patent Application Publication No. 20080289276 discloses "an improved cementitious mixture used to form structural components that are strong, lightweight, heat and fire resistant, and very economical to produce. The material includes a mixture of cement, water, ribbon-like virgin polyethylene strips and aggregate materials. The aggregate preferably includes recycled industrial waste products. Examples of these industrial wastes include shredded tires, wood by-products, waste coal combustion by-products, recycled waste gypsum products, recycled industrial foundry sand, and waste foam products such a Styrofoam. This new cementitious material is strong and lightweight. It has a lower thermal conductivity than conventional concrete and therefore improved insulative properties. The use of industrial recyclables not only enhances the performance characteristics of the components made from this material but aids in maintaining the environment by providing a practical use for industrial waste."

U.S. Patent Application Publication No. 20090071378 discloses an "ultra high strength fiber-reinforced mortar or concrete that shows a higher fluidity (workability) at the fresh state, a higher bending strength with a less content of metal fiber by enhancing both the absolute value of the compressive strength of mortar - matrix excluding metal fiber and the ratio of the bending strength relative to the compressive strength simultaneously at the hardened state, and acceptability of fine aggregate being used in ordinary ready-mixed concrete. An ultra high strength fiber-reinforced cement composition is characterized in that it contains cement, silica fume, coal gasification fly ash, gypsum and metal fiber and that the mass ratio of silica fume : coal gasification fly ash is 95 through 50 portions: 5 through 50 portions. Ultra high strength fiber-reinforced mortar or concrete contains such a cement composition and fine aggregate. An ultra high strength cement additives is characterized in that it contains silica fume, coal gasification fly ash and gypsum as principal ingredients and the mass ratio of silica fume: coal gasification fly ash is 95 through 50 portions: 5 through 50 portions."

U.S. Patent Application Publication No. 20070289502 discloses a "mixture of metal fiber concrete based on cement, granular elements and water, comprising metal fibers whose diameter ranges from 1.15 mm and 1.8 mm, et wherein the form coefficient thereof is 35-t 45. The dosing of metal fibers is at least 80 kg/m.sup.3. This concrete mixture is particularly adapted to the creation of structural elements such as floor slabs without traditional reinforcements. "

U.S. Patent Application Publication No. 20070062144 discloses "a form panel system that is capable of constructing a frame structure including a wall of a concrete-based building and a concrete structure including various retaining walls for civil-engineering works. The form panel system comprises compression cement boards disposed opposite to each other while being spaced a predetermined distance from each other, the compression cement boards being reinforced with fiber materials, reinforcing boards obtained by forming the compression cement boards in predetermined shapes, or foamed plastic heat insulating panels, and metal plate studs disposed between the compression cement boards. The metal plate studs are composed of metal plates having predetermined thicknesses and distances therebetween, which are selected depending on the durability of concrete. Each of the metal plate studs has at least one opening formed therein. Each of the metal plate studs is provided at both opposite side ends thereof with bent parts. The metal plate stud is fixed to the respective compression cement boards by means of fixing pieces, and concrete is injected and cured into the space between the compression cement boards, to which the metal plate studs are fixed and the foamed plastic heat insulating panels are attached. According to the present invention, the fiber-reinforced compression cement boards, the foamed plastic heat insulating panels, the metal plate studs having the openings are vertically or horizontally arranged without limits."

U.S. Patent Application Publication No. 20040258911 discloses a "concrete article comprised of concrete having therein a reinforcing fiber, where at least about 50 percent of the reinforcing fibers are frayed only at an end or ends of the reinforcing fibers, may be made by mixing concrete, water and a reinforcing fiber for a sufficient time to fray the ends of at least 50 percent of the fibers and curing the mixture to form the concrete article. The fiber may be a reinforcing fiber comprised of at least two filaments bonded together and the filaments being comprised of a polymeric core and a polymeric sheath comprised of a fusing-fraying polymer, such that the reinforcing fiber, when mixed with inorganic particulates, frays predominately only at an end or ends of the fiber."

WO 2010/047919 A1 discloses a method of constructing a structure by placing an insulating concrete form, pouring a concrete mix into the mold chamber and allowing it to set and harden. US 5 503 670 A discloses a concrete composition for making concrete structural elements without using passive reinforcements. It uses cement, metal fibers, a pozzolan and additives. US 2007/062143 A1 described the use of glass fibers or polypropylene fibers.

The inventions disclosed and taught herein are directed to an improved method of constructing a concrete insulated form wall.

### BRIEF SUMMARY OF THE INVENTION

The present invention relates to a method of constructing a wall to meet an applicable building code, and a wall created by this method. The method may include placing insulating concrete forms, having a cavity, where the wall is to be constructed; placing a limited quantity of metal reinforcement steel within the cavity, such that the limited quantity of reinforcing steel is insufficient to meet the applicable building code; and pouring a mix of stone, sand, Portland cement, fly ash, and mineral fibers into the cavity; and allowing the mix to cure, thereby meeting the applicable building code without additional metal reinforcement. The mix may contain between 40 and 50% stone, between 30 and 40% sand, between 10 and 15% Portland cement, between 5 and 10% fly ash, between 0.5 and 2% mineral fibers comprising calcium inosilicate (CaSiO₃) fibers or mineral fibers comprising one or more minerals of the pyroxene group of minerals, and between 0.005 and 5% admixtures by weight. More specifically, the mix may contain between 45 and 50% stone, between 30 and 35% sand, between 10 and 12% Portland cement, between 5 and 8% fly ash, between 1 and 2% mineral fibers, and between 0 and 1% admixtures by weight. In one specific example, the mix may contain approximately 48.24% stone, 33.15% sand, 10.32% Portland cement, 6.88% fly ash, 1.41% mineral fibers, and preferably less than 0.005% of admixtures by weight. The mix may contain mineral fibers of different grades and/or dimensions.

### BRIEF DESCRIPTION OF THE SEVERAL VIEWS OF THE DRAWINGS

Figure 1 illustrates a prior art reinforced wall built using traditional Insulated Concrete Form (ICF) techniques;
Figure 2 illustrates a traditional pattern of rebar that may be needed to reinforce the wall of FIG. 1, in order to meet an applicable building code requirement;
Figure 3 illustrates a particular embodiment of a reinforced wall 100 using certain aspects of the present invention;
Figure 4 illustrates an improved pattern of rebar that may be used to reinforce the wall of FIG. 3 ,in order to meet the applicable building code requirement; and
Figure 5 illustrates a method of constructing a wall to meet the applicable building code according to certain aspects of the present invention.

### DETAILED DESCRIPTION OF THE INVENTION

The Figures described above and the written description of specific structures and functions below are not presented to limit the scope of what Applicants have invented or the scope of the appended claims. Rather, the Figures and written description are provided to teach any person skilled in the art to make and use the inventions for which patent protection is sought. Those skilled in the art will appreciate that not all features of a commercial embodiment of the inventions are described or shown for the sake of clarity and understanding. Persons of skill in this art will also appreciate that the development of an actual commercial embodiment incorporating aspects of the present inventions will require numerous implementation-specific decisions to achieve the developer's ultimate goal for the commercial embodiment. Such implementation-specific decisions may include, and likely are not limited to, compliance with system-related, business-related, government-related and other constraints, which may vary by specific implementation, location and from time to time. While a developer's efforts might be complex and time-consuming in an absolute sense, such efforts would be, nevertheless, a routine undertaking for those of skill in this art having benefit of this disclosure. It must be understood that the inventions disclosed and taught herein are susceptible to numerous and various modifications and alternative forms. Lastly, the use of a singular term, such as, but not limited to, "a," is not intended as limiting of the number of items. Also, the use of relational terms, such as, but not limited to, "top," "bottom," "left," "right," "upper," "lower," "down," "up," "side," and the like are used in the written description for clarity in specific reference to the Figures and are not intended to limit the scope of the invention or the appended claims.

Applicants have created a method of constructing a wall to meet an applicable building code, and a wall created by this method. The method may include placing insulating concrete forms, having a cavity, where the wall is to be constructed; placing a limited quantity of metal reinforcement steel within the cavity, such that the limited quantity of reinforcing steel is insufficient to meet the applicable building code; pouring a mix of aggregate, sand, Portland cement, fly ash, and mineral fibers into the cavity; and allowing the mix to cure, thereby meeting the applicable building code without additional metal reinforcement. The mix may contain between 40 and 50% stone, between 30 and 40% sand, between 10 and 15% Portland cement, between 5 and 10% fly ash, between 0.5 and 2% mineral fibers comprising calcium inosilicate (CaSiO₃) fibers or mineral fibers comprising one or more minerals of the pyroxene group of minerals, and between 0.005 and 5% admixtures by weight. More specifically, the mix may contain between 45 and 50% stone, between 30 and 35% sand, between 10 and 12% Portland cement, between 5 and 8% fly ash, between 1 and 2% mineral fibers, and between 0 and 1% admixtures by weight. In one specific example, the mix may contain approximately 48.24% stone, 33.15% sand, 10.32% Portland cement, 6.88% fly ash, 1.41% mineral fibers, and preferably less than 0.005% of admixtures by weight. The mix may contain mineral fibers of different grades and/or dimensions.

Building code requirements typically require steel reinforcement, such as one half inch #4 rebar and/or five eighth inch #5 rebar depending on loads, in an Insulated Concrete Form (ICF) wall, irrespective of a thickness of concrete found in a center cavity of the ICF form. Without this traditional steel reinforcement in concrete building envelopes, an ICF wall system to not achieve building code requirements, especially during peak loading. Of course, inclusion of traditional steel reinforcement is costly, both in terms of materials and labor.

One relatively recent attempt to solve this problem is to replace some of the rebar with steel fiber. For example, Propex®'s Novamesh ICF mix design relies heavily on steel-fiber reinforcement to replace the structural strength achieved with traditional steel rebar reinforcement. Similarly to traditional steel rebar reinforcement, the steel fibers, when blended with concrete, are mechanically-bound within the hardened concrete matrix. The steel fibers provide the structural strength necessary to produce a concrete mix design with enough strength to meet building code requirements and/or American Society of Testing and Measures (ASTM) and/or American Concrete Institute (ACI) comparative tests. Consequently, the removal of steel-fiber reinforcement in the ICF building envelope would cause a Novamesh wall system to not develop enough strength during peak loading conditions to meet building code requirements. Additionally, the limited amount of polypropylene fibers found in the Novamesh ICF mix would not provide enough strength to, independently, provide the necessary structural reinforcement during peak loading conditions as the fibers are not actually structural fibers. Instead, the polypropylene fibers are included in the mix design to provide non-structural protection against shrinkage.

In addition, current steel fiber reinforcement has difficulty dispersing properly in the concrete matrix due to the "interlocking" nature of the steel fibers as they are blended. Since the fibers do not adequately disperse, it is questionable if the fibers are adequately distributed throughout the wall or consolidated within isolated regions of the wall. Sporadic placement of steel reinforcement would have significant structure implications for steel-fiber reinforced concrete. First, if an isolated wall section is void of steel fibers, this isolated section would be significantly weaker than intended. Second, if an isolated area of the wall experienced steel-fiber 'balling', this area would lack the quantity of cement binder necessary to mechanically fasten the steel fiber in place. In both cases, current steel fiber reinforcement may not meet building code requirements without expensive and time consuming installation practices.

In contrast, the mix design of the present invention uses minerals in place of steel-fibers to achieve the required strength needed to achieve building code requirements and/or ASTM and/or ACI approval for replacing traditional steel reinforcement in ICF wall systems. The use of minerals to replace steel reinforcement in ICF construction harnesses the synergistic relationship between unique combinations of natural occurring minerals, such as multiple lengths, thicknesses, compositions, and/or grades of mineral fibers, cement, and an industrial waste product, such as fly ash. In one preferred embodiment, the mineral fibers comprise a calcium inosilicate mineral (CaSiO₃) that may contain small amounts of iron, magnesium, and manganese. In other embodiments, the mineral fibers comprise one or more of the pyroxene group of minerals.

Rather than relying on mechanical bonding such as with steel rebar, steel fiber, and synthetic reinforcement for ICF construction, the mix design of the present invention relies on a chemical bond created through the unique combination of natural minerals, cement and fly ash. To put it another way, the bond which binds synthetic and steel fiber-reinforced concrete is mechanical, in that as the concrete dries, the fibers are bound in place, providing the required strength. In contrast, the mix design of the present invention relies on a chemical bond which is created during the concrete hydration process that fuses the materials together, creating a structural concrete matrix with enhanced reinforcement characteristics.

Along with considerable cost savings, removing steel reinforcement (rebar) and steel fiber reinforcement in ICF walls will dramatically improve the workability, consistency, strength and embodied energy of the concrete in ICF construction. Additionally, the elimination of steel reinforcement will allow for the reduction of labor to place and consolidate the fiber-filled concrete by eliminating the "balling" effect characterized by concrete with steel fiber reinforcement.

While others have used wollastonite in concrete mixtures for non-structural applications, these applications rely on a single grade, or length, of wollastonite and typically use 10% wollastonite per concrete volume, or greater. This use of mineral fibers, creates a concrete matrix with enhanced aesthetic attributes and reduced cosmetic cracking, which cannot meet structural building code requirements because such concrete mixes are simply not strong enough to be considered structural.

Furthermore, in our internal testing we discovered that combined grades of mineral fibers, when mixed with a high volume of fly ash, develops uncharacteristically-high flexural and axial strengths. In once embodiment, this uncharacteristically-high flexural and axial strength was exhibited in a mix containing only 1.41% mineral fibers by concrete volume. The chemical bonding, as opposed to traditional mechanical bonding, of the mix design of the present invention creates a finished structural wall system that exceeds building code requirements and/or ASTM and ACI testing standards, thereby allowing the mix design of the present invention to eliminate the need for most traditional steel reinforcement and all steel-fiber reinforcement. The mix design of the present invention, thus, meets both peak and post-peak strength requirements without the metal reinforcement previously needed.

The mix design of the present invention may also replace 40% of cement traditionally used with an industrial waste product, such as fly ash, rather than the common practice to only replace up to 20% of cement with fly ash. We believe that these higher levels of fly ash positively contribute to the chemical reactions and bonding taking place in the concrete hydration process. For example, we believe that pozzolons in the fly ash react with free calcium ions in the cement and mineral fibers enhancing the chemical bonding during the concrete hydration process.

We also believe that the ICF forms themselves provide optimal curing conditions that help improve the structural performance of the mix design of the present invention. For example, the chemical reactions may be enhanced because the concrete matrix cures within an insulated curing cavity. This cavity may help maintain a consistent temperature throughout the curing process. This cavity may also allow less water to escape during placement and curing. Both of these attributes would lead to enhanced structural characteristics. In comparison, ICF walls reinforced with steel fibers would not benefit from such optimal curing since the fiber-concrete bond is mechanical rather than chemical.

In one preferred embodiment, the mix design contains approximately 48.24% stone, or aggregate, 33.15% sand, 10.32% Portland cement, 6.88% fly ash, 1.41% minerals, and preferably less than 0.005% of admixtures by weight. However, a mix according to the present invention may contain between 30 and 50% stone, with a preferred range being between 40 and 50% stone. A mix according to the present invention may also contain between 30 and 50% sand, with a preferred range being between 30 and 40% sand. A mix according to the present invention may also contain between 5 and 20% Portland cement, with a preferred range being between 10 and 15% Portland cement. A mix according to the present invention may also contain between 2 and 15% fly ash, with a preferred range being between 5 and 10% fly ash. A mix according to the present invention may also contain between 0.5 and 10% minerals, with a preferred range being between 0.5 and 2% minerals. A mix according to the present invention may also contain between 0 and 10% admixtures, with a preferred range being between 0.005 and 5% admixtures. Thus, a preferred mix may contain between 40 and 50% stone, between 30 and 40% sand, between 10 and 15% Portland cement, between 5 and 10% fly ash, between 0.5 and 2% minerals, and between 0.005 and 5% admixtures. The lower end of the range represents the most commonly used percentage of the material and the upper bound is a measure that was determined, through our lab testing, to be unsuitable for this given application. An alternative mix may contain between 45 and 50% stone, between 30 and 35% sand, between 10 and 12% Portland cement, between 5 and 8% fly ash, between 1 and 2% minerals, and between 0 and 1% admixtures. Additional specific mixtures are shown below, along with the relative strength of a given cured wall for each mixture.

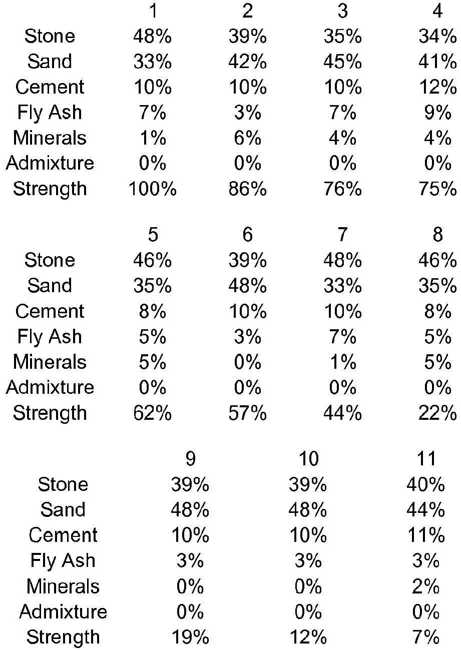

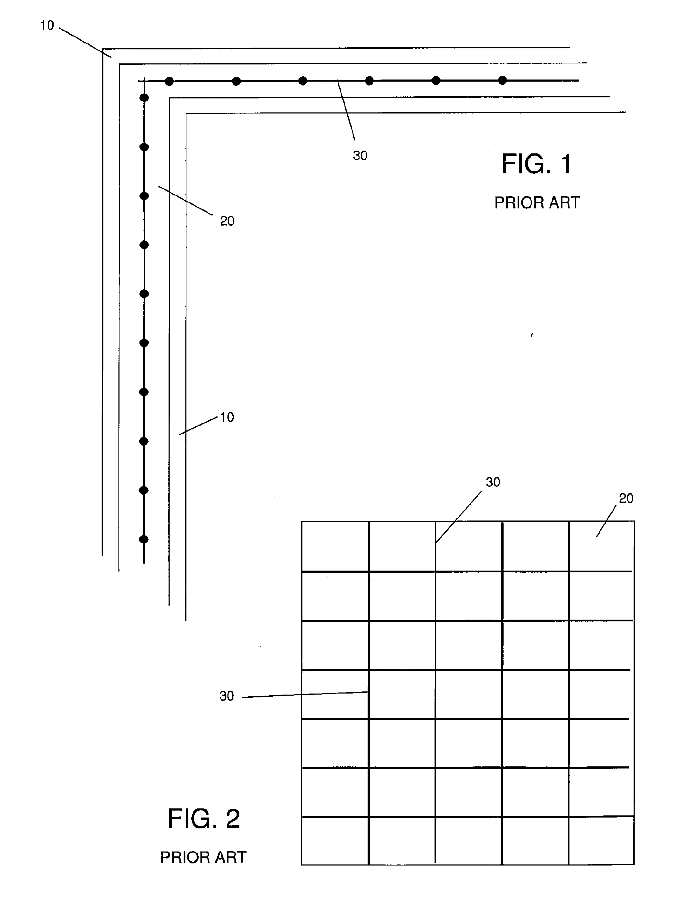

FIG. 1 is an illustration of a prior art reinforced wall built using traditional ICF techniques. As shown, forms 10 are filled with a traditional concrete mix 20 with traditional rebar reinforcement 30. FIG. 2 shows a traditional pattern of rebar 30 that may be needed to reinforce the concrete 20, in order to meet an applicable building code requirement.

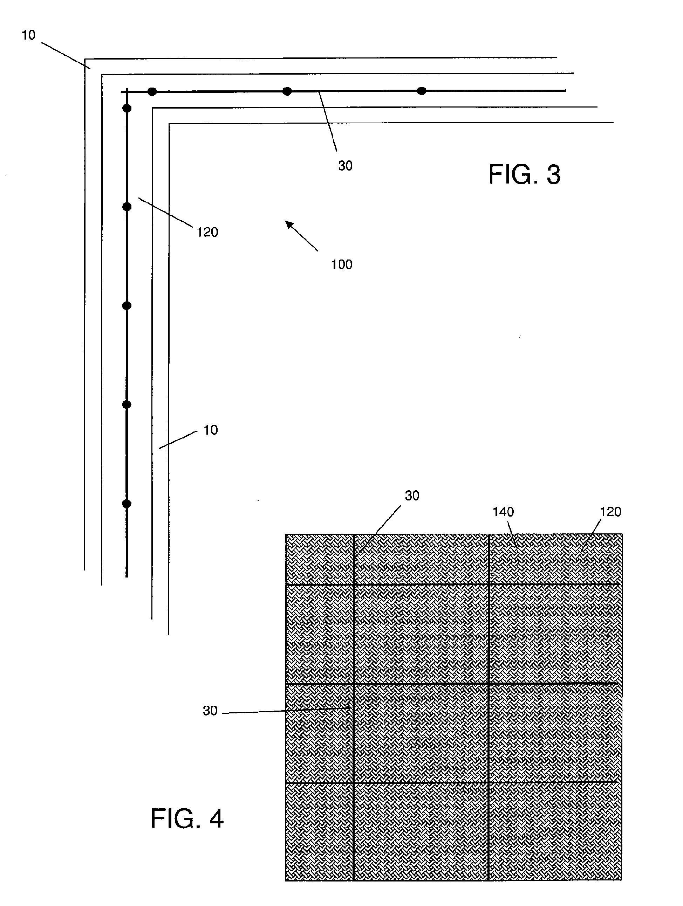

FIG. 3 is an illustration of a reinforced wall 100 built using certain aspects of the present invention. As shown, the forms 10 are filled with a specially formulated concrete mix 120, such as that described above, with a limited quantity of traditional rebar reinforcement 30. When compared to FIG. 1, one can readily see that significantly less rebar 30 is required, in order to meet the applicable building code requirement. This results in dramatic cost savings, both in terms of labor and materials.

FIG. 4 shows an improved pattern of rebar 30 that may be all that is needed to reinforce the concrete 120. When compared to FIG. 2, one can readily see that significantly less rebar 30 is required. Rather than relying as heavily on the rebar 30, or other steel reinforcement, the reinforced wall 100 of the present invention relies on mineral fibers 140 and other components of the concrete mix of the present invention, as discussed above, in order to meet the applicable building code requirement.

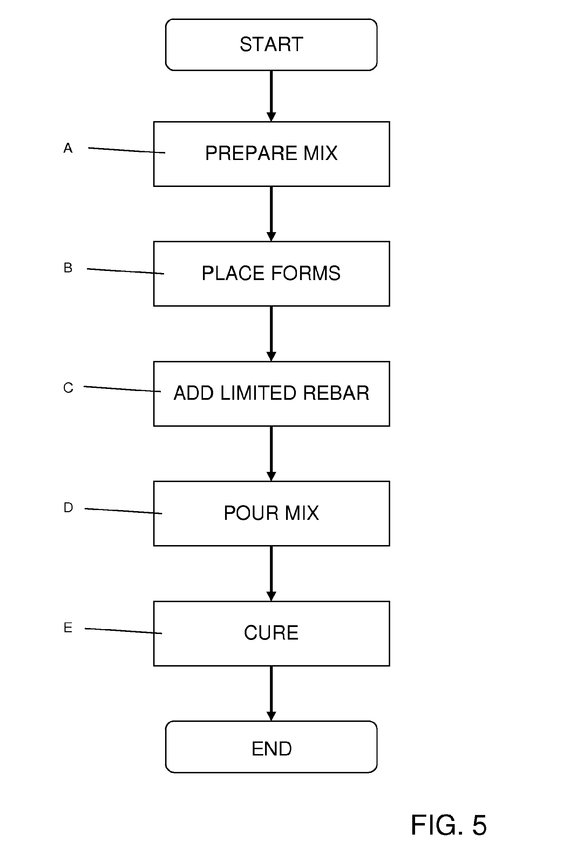

Turning now to FIG. 5, a method of constructing a wall to meet an applicable building code according to certain aspects of the present invention will be described. A concrete mix 120 according to the present invention is prepared, as set forth in step A. The mix 120 of the present invention preferably includes mineral fibers and a relative high amount of fly ash. For example, 20-40% of the cement normally used in a traditional mix may be replaced with fly ash. As discussed above, the mix 120 may contain mineral fibers of different compositions, grades, and/or dimensions. This may result in significant material cost savings.

The forms 10 are set up, or placed, where the wall 110 is desired, as set forth in step B. A limited quantity of rebar 30, or other reinforcement, is placed in the forms 10, as set forth in step C. This limited quantity of metal reinforcement is insufficient to meet the applicable building code, as the reinforced wall 100 of the present invention does not rely slowly on the rebar 30, other metal reinforcement, or even mechanical bonding with the reinforcement, in order to meet the applicable building code requirement. This results in significant material cost savings.

The mix 120 is then poured into the forms 10, as set forth in step D. Because there is less rebar 30 in the voids within the forms, and because there is no need of metal fibers in the mix 120, the mix 120 flows relatively easily into the forms 110. Furthermore, because the mix 120 of the present invention is less susceptible to the clumping problems, or "balling" effect, associate with metal fibers in a more traditional mix, less effort is required to ensure proper distribution of the reinforcing materials. Finally, the mix 120 of the present invention is much easier on equipment, as there is no need of metal fibers in the mix 120 which can be damaging to mixing, as well as on-site, equipment. This results in significant labor and equipment cost savings.

Finally, the mix 120 is allowed to cure in the forms 10. As discussed above, the forms 10 provide a consistent temperature throughout the curing process and otherwise provides optimal curing, thereby enhancing the chemical reactions, thereby improving the structural performance of the mix 120 of the present invention. In this manner, the mix 120 of the present invention utilizes chemical bonding, rather than mechanical bonding, of the reinforcement material, such as the mineral fibers discussed above, in order to meet the applicable building code requirement with less metal reinforcement as previously required.

Other and further embodiments utilizing one or more aspects of the inventions described above can be devised without departing from the spirit of Applicant's invention. For example, while the present invention is anticipated to be ideal with four inch ICF walls, the method and/or mix of the present invention may be used with thinner or thicker walls, such as six or eight inch walls. Furthermore, while the invention is particularly well suited to ICF walls, the method and/or mix of the present invention may be used with other forms of concrete construction, such as cast-in-place or pre-cast walls, floors, and/or other panels or pavements. The method and/or mix of the present invention may also be used with tilt-up applications, such as where walls or other vertical elements are formed horizontally and then tilted-up vertically. Additionally, synthetic fibers may be used to supplement and/or replace some of the mineral fibers. Further, the various methods and embodiments of the present invention can be included in combination with each other to produce variations of the disclosed methods and embodiments. Discussion of singular elements can include plural elements and vice-versa.

The order of steps can occur in a variety of sequences unless otherwise specifically limited. The various steps described herein can be combined with other steps, interlineated with the stated steps, and/or split into multiple steps. For example, the wall 100 may be constructed in sections, each with their own iteration of one or more of the described steps. Additionally, or alternatively, the mix may be prepared while the forms are being placed, for example. Similarly, elements have been described functionally and can be embodied as separate components or can be combined into components having multiple functions.

## Claims

1. A method of constructing a structure to meet an applicable building code, the method including the steps of:
placing a concrete form, having a cavity, where the structure is to be constructed;
placing a limited quantity of metal reinforcement within the cavity, such that the limited quantity of metal reinforcement is insufficient to meet the applicable building code;
pouring a mix of between 40 and 50% stone, between 30 and 40% sand, between 10 and 15% Portland cement, between 5 and 10% fly ash, between 0.5 and 2% mineral fibers comprising calcium inosilicate (CaSiO₃) fibers or mineral fibers comprising one or more minerals of the pyroxene group of minerals and between 0.005 and 5% admixtures by weight into the cavity; and
allowing the mix to cure, thereby meeting the applicable building code without additional metal reinforcement.

2. The method according to claim 1, wherein the step of pouring a mix includes pouring a mix that contains multiple grades of the mineral fibers.

3. The method according to claim 1, wherein the step of pouring a mix includes pouring a mix that contains multiple lengths of the mineral fibers.

4. The method according to claim 1, wherein the step of pouring a mix includes pouring a mix that contains multiple thicknesses of the mineral fibers.

5. The method according to claim 1, wherein the mix relies on chemical bonding of its ingredients, as opposed to mechanical bonding, to provide a required strength to meet the applicable building code, without additional metal reinforcement.

6. The method according to claim 1, wherein the step of pouring a mix includes pouring a mix that replaces between 20 and 40% Portland cement with fly ash.

7. The method according to claim 1, **characterised in that** said structure is a wall, the method including the steps of:
placing concrete forms, having a cavity, where the wall is to be constructed;
placing a limited quantity of metal reinforcement within the cavity, such that the limited quantity of metal reinforcement is insufficient to meet the applicable building code; and
pouring a mix of aggregate, sand, cement, fly ash, and mineral fibers into the cavity, wherein the mix contains approximately 48.24% stone, 33.15% sand, 10.32% Portland cement, 6.88% fly ash, 1.41 % mineral fibers of different grades comprising calcium inosilicate (CaSiO₃) fibers or mineral fibers of different grades comprising one or more minerals of the pyroxene group of minerals, and less than 0.005% of admixtures by weight,
allowing the mix to cure in the forms, thereby meeting the applicable building code without additional metal reinforcement.

## Patentansprüche

1. Verfahren zum Bau eines Bauwerks zur Erfüllung einer geltenden Bauordnung, wobei das Verfahren folgende Schritte umfasst:
Setzen einer Betonform, welche eine Kavität aufweist, an der Stelle, an welcher das Bauwerk gebaut werden soll;
Setzen einer begrenzten Menge an Metallverstärkungen innerhalb der Kavität, so dass die begrenzte Menge an Metallverstärkungen nicht ausreicht, um die anwendbare Bauordnung zu erfüllen;
Einfüllen einer Mischung aus zwischen 40 und 50 % Stein, zwischen 30 und 40 % Sand, zwischen 10 und 15 % Portlandzement, zwischen 5 und 10 % Flugasche, zwischen 0,5 und 2 % Mineralfasern einschließlich Calciumsilikat (CaSiO₃) -fasern oder Mineralfasern einschließlich eines oder mehrerer Minerale der Pyroxengruppe von Mineralen und zwischen 0,005 und 5 Gewichts-% an Zusätzen in die Kavität; und
Aushärtenlassen der Mischung, womit die geltende Bauordnung ohne eine zusätzliche Metallverstärkung erfüllt wird.

2. Verfahren nach Anspruch 1, wobei der Schritt des Einfüllens einer Mischung das Einfüllen einer Mischung, welche mehrere Grade der Mineralfasern enthält, beinhaltet.

3. Verfahren nach Anspruch 1, wobei der Schritt des Einfüllens einer Mischung das Einfüllen einer Mischung, welche mehrere Längen der Mineralfasern enthält, beinhaltet.

4. Verfahren nach Anspruch 1, wobei der Schritt des Einfüllens einer Mischung das Einfüllen einer Mischung, welche mehrere Dicken der Mineralfasern enthält, beinhaltet.

5. Verfahren nach Anspruch 1, wobei die Mischung, im Gegensatz zu einer mechanischen Verbindung, auf einer chemischen Verbindung ihrer Inhaltsstoffe basiert, um eine erforderliche Stärke bereitzustellen, um die anwendbare Bauordnung ohne eine zusätzliche Metallverstärkung zu erfüllen.

6. Verfahren nach Anspruch 1, wobei der Schritt des Einfüllens einer Mischung das Einfüllen einer Mischung, welche zwischen 20 und 40 % Portlandzement durch Flugasche ersetzt, beinhaltet.

7. Verfahren nach Anspruch 1, **dadurch gekennzeichnet, dass** das genannte Bauwerk eine Wand ist, wobei das Verfahren folgende Schritte beinhaltet:
Setzen von Betonformen, welche eine Kavität aufweisen, an der Stelle, an welcher die Wand gebaut werden soll;
Setzen einer begrenzten Menge an Metallverstärkungen innerhalb der Kavität, so dass die begrenzte Menge an Metallverstärkungen nicht ausreicht, um die geltende Bauordnung zu erfüllen; und
Einfüllen einer Mischung aus Zuschlag, Sand, Zement, Flugasche und Mineralfasern in die Kavität, wobei die Mischung ungefähr 48,24 % Stein, 33,15 % Sand, 10,32 % Portlandzement, 6,88 % Flugasche, 1,41 % Mineralfasern verschiedener Grade einschließlich Calciumsilikat (CaSiO₃) -fasern oder Mineralfasern verschiedener Grade einschließlich eines oder mehrerer Minerale der Pyroxengruppe von Mineralen und weniger als 0,005 Gewichts-% an Zusätzen enthält,
Aushärtenlassen der Mischung in den Formen, womit die geltende Bauordnung ohne eine zusätzliche Metallverstärkung erfüllt wird.

## Revendications

1. Un procédé de construction d'une structure pour satisfaire un code de bâtiment applicable, le procédé comportant les étapes de :
placer une forme concrète, ayant une cavité, où la structure doit être construite ;
placer une quantité limitée de renforcement métallique à l'intérieur de la cavité, de sorte que la quantité limitée de renforcement métallique soit insuffisante pour satisfaire le code de bâtiment applicable ;
verser un mélange contenant entre 40 et 50 % de pierre, entre 30 et 40 % de sable, entre 10 et 15 % de ciment Portland, entre 5 et 10 % de cendre volante, entre 0,5 et 2 % de fibres minérales comprenant des fibres d'inosilicate de calcium (CaSiO₃) ou des fibres minérales comprenant un ou plusieurs minéraux du groupe des pyroxènes de minéraux et entre 0,005 et 5 % d'adjuvants en poids dans la cavité ; et
laisser le mélange durcir, satisfaire ainsi le code de bâtiment applicable sans renforcement métallique supplémentaire.

2. Le procédé selon la revendication 1, dans lequel l'étape de versement d'un mélange comporte le versement d'un mélange qui contient diverses qualités de fibres minérales.

3. Le procédé selon la revendication 1, dans lequel l'étape de versement d'un mélange comporte le versement d'un mélange qui contient diverses longueurs de fibres minérales.

4. Le procédé selon la revendication 1, dans lequel l'étape de versement d'un mélange comporte le versement d'un mélange qui contient diverses épaisseurs de fibres minérales.

5. Le procédé selon la revendication 1, dans lequel le mélange se base sur la liaison chimique de ses ingrédients, à l'inverse de la liaison mécanique, pour fournir une force nécessaire pour satisfaire le code de bâtiment applicable, sans renforcement métallique supplémentaire.

6. Le procédé selon la revendication 1, dans lequel l'étape de versement d'un mélange comporte le versement d'un mélange qui remplace entre 20 et 40 % du ciment Portland par de la cendre volante.

7. Le procédé selon la revendication 1, **caractérisé en ce que** ladite structure est un mur, le procédé comportant les étapes de :
placer des formes concrètes, ayant une cavité, où le mur doit être construit ;
placer une quantité limitée de renforcement métallique à l'intérieur de la cavité, de sorte que la quantité limitée de renforcement métallique soit insuffisante pour satisfaire le code de bâtiment applicable ; et
verser un mélange d'agrégats, de sable, de ciment, de cendre volante, de fibres minérales dans la cavité, dans lequel le mélange contient approximativement 48,24 % de pierre, 33,15 % de sable, 10,32 % de ciment Portland, 6,88 % de cendre volante, 1,41 % de fibres minérales de différentes qualités comprenant des fibres d'inosilicate de calcium (CaSiO₃) ou des fibres minérales de différentes qualités comprenant un ou plusieurs minéraux du groupe des pyroxènes de minéraux, et moins de 0,005 % d'adjuvants en poids,
laisser le mélange durcir dans les formes, satisfaire ainsi le code de bâtiment applicable sans renforcement métallique supplémentaire.
